# EUROPEAN PATENT APPLICATION

(11) **EP 3 556 581 A1**
(43) Date of publication of application: **23.10.2019**
(21) Application number: 17880552.9
(22) Date of filing: 05.06.2017
(51) Int. Cl.: B60G 21/045

(54) **TRANSPORTATION TROLLEY**

(30) Priority: 14.12.2016 CN 201611152454
(71) Applicant: Zhuineng Robotics (Shanghai) Co., Ltd, Shanghai 200333 (CN)
(72) Inventor: LIU, Zhe, Shanghai 200333 (CN)
(74) Representative: Leihkauf, Steffen Falk
(86) International application number: PCT/CN2017/087221
(87) International publication number: WO 2018/107674

(57) **Abstract**

Provided is a transportation vehicle, comprising a chassis (10) and a wheelset structure (20). Each side of the chassis (10) is pivotally connected to at least one wheelset structure (20). The wheelset structure (20) comprises a connecting member (23) and two wheels (21, 22) pivotally arranged on the connecting member (23), the connecting member (23) having a pivot point used for pivotally connecting to the chassis (10), and the pivot point being located between the two wheels (21, 22). By changing the connection manner between the wheels and the chassis, when the vehicle is travelling on the uneven ground, the heights of the two wheels from the ground are automatically adjusted by gravity pressing down so as to facilitate the wheels contacting the ground.

## Description

### FIELD OF THE INVENTION

The present invention relates to transportation robot, particularly to a transportation vehicle.

### BACKGROUND OF THE INVENTION

The wheels of the vehicle, especially the driving wheels, are required to contact the ground during travelling, the requirement of contacting the ground means to contact with the ground and withstand a certain pressure, so as to ensure normal travelling, otherwise slipping may occur. Prior vehicles generally use springs to hold the driving or driven wheels, so that the wheels can still be kept closing to the ground when they are on the uneven ground.

However, this method has three defections:
1. When manufacturing the vehicle, the elastic coefficients of the springs are different, and the different compression amounts will cause unbalance stress on each wheel, which will bring difficulties to standardization, and even can't avoid slipping.
2. When accelerating and decelerating, the process of compression and springback of the spring structure will be repeated, causing the vehicle to swing back and forth, which can even cause the handled goods to fall.
3. There are often more than one installed springs, many parts are required, and the installation procedure is complicated.

### SUMMARY OF THE INVENTION

It is an object of the present invention to provide a vehicle structure that avoids the use of springs and can still contact to the ground when on the uneven ground without causing the vehicle to swing.

In order to achieve the object, there is provided a transportation vehicle, comprising a chassis and a wheelset structure, both sides of the chassis are each provided with at least one wheelset structure, the wheelset structure comprising a connecting member and two wheels, the connecting member is pivotally connected to the chassis, the two wheels are connected to two ends of the connecting member respectively, and the two wheels are rotatable relative to a pivot point of the connecting member and the chassis to contact the ground.

The two wheels being rotatable relative to the pivot point of the connecting member and the chassis means that the pivot point is located between the two wheels. When one wheel moves upward, the other wheel will inevitably be caused to move downward, thereby adjusting the contacting condition of the two wheels to the ground.

The transportation vehicle of the present invention can generally be used for transportation and traction, by connecting the two wheels to the connecting member and in turn connecting to the chassis, the connecting member and the wheels form a lever structure, and a rotating point is located between the two wheels. The two wheels form a set of automatic adjustment devices that apply force to each other, when the ground is uneven, the two wheels apply a pressing force on the ground, under the influence of gravity and a moment formed with respect to the rotation point. This alleviates the problem of the slip of the general transportation vehicle during transportation, while avoiding the use of the spring, and is less prone to swing.

The rotation point is not necessarily at the center between the two wheels.

Preferably, the chassis includes a base fixed to the chassis, and the wheelset structure is pivotally connected to the base.

The arrangement of the base is advantageous to adapt for the diameters of the various wheels, and adjust the distance between the center of the wheel and the chassis.

The connecting member can be in a variety of forms, such as rods, vertical plates, horizontal plates, etc., the choice thereof primarily depends on the wheel mounting mode.

In an embodiment, the connecting member is a connecting rod structure, two ends thereof are pivotally connected to the two wheels respectively, and the side of the connecting rod structure is provided with an intermediate shaft, the intermediate shaft is cooperatively connected with a shaft hole in one side of the base.

The structure is provided such that the two wheels are both pivotally connected to the base.

Preferably, both sides of the chassis are each provided with at least two wheelset structures.

The stability of the vehicle that has the two wheelset structures or above is greatly improved, and the swing phenomenon is not easy to occur.

Alternatively, two sides of the chassis are each provided with a wheel directly pivotally connected to the side of the chassis.

Preferably, the front side of the chassis is also provided with one wheelset structure, and an axial direction of the intermediate shaft in the wheelset structure on the front side is perpendicular to an axial direction of the intermediate shaft in the wheelset structure on both sides of the chassis.

In an embodiment, in the wheelset structure, one of the wheels is a universal wheel, and the connecting member is a connecting rod structure, the bottom of one end of the connecting rod structure is connected to the universal wheel, and the outside of the other end is pivotally connected to the wheel.

The universal wheel is a common mechanical structure.

In this embodiment, although the connecting member is a connecting rod structure, the connection position of the pivotally connected wheel is disposed on the side, and the connection position of the universal wheel is located on a support surface above the universal wheel.

The universal wheel has a support function, generally in this structure, the universal wheel is used as a driven wheel, and the pivotally connected wheel is used as a driving wheel. In this structure, the universal wheel can achieve the steering function that is difficult to achieve by an ordinary pivotally connected wheel, and is easy to carry and transport.

Further, each side of the chassis is provided with at least one wheelset and at least one universal wheel directly connected to a bottom surface of the chassis.

Further, the wheel in the wheelset structure is located between the universal wheel in the wheelset structure and the universal wheel connected to the bottom surface of the chassis.

In a structure of six wheels, four universal wheels are used in combination with two pivotally connected wheels, and there are two wheelset structures, which not only ensure stability, but also meet the requirements of contacting the ground, meanwhile steering in-situ can be realized.

In an embodiment, the wheels in the wheelset structure are omnidirectional wheels that are pivotally connected to two ends of the connecting member.

Further, the connecting member is a connecting plate structure, two ends thereof are pivotally connected to the universal wheels respectively, and two connecting plate structures are pivotally connected to the base by an intermediate shaft.

As the connecting plate structure, it is a horizontal plate structure, parallel to the chassis, and can replace the chassis to some extent.

The connecting member is a connecting plate structure, two ends thereof are each connected with an omnidirectional wheel, and the connecting plate is pivotally connected to the base by an intermediate shaft.

Preferably, the bottom plate is connected with an omnidirectional wheel.

A transportation vehicle comprises a chassis and a wheelset structure, the wheelset structure comprising a connecting member and two wheels, the connecting member being pivotally connected to the chassis, the two wheels being connected to two ends of the connecting member respectively, the two wheels being rotatable relative to a pivot point of the connecting member and the chassis to contact the ground.

Preferably, the wheelset structure is mounted on one side of the chassis, the chassis comprises a base fixed to the chassis, the connecting member is a connecting plate structure, two ends of the connecting plate are each connected with an omnidirectional wheel, and the connecting plate is pivotally connected to the base by an intermediate shaft, and the chassis is provided with two omnidirectional wheels directly connected to the chassis.

When the robot passes through an uneven road, one or more omnidirectional wheels will be off-contact or raised, and the intermediate shaft will rotate accordingly, so that each omnidirectional wheel can contact the ground, thereby avoiding slipping. Since the spring structure is not used, the robot does not "nod".

Preferably, the omnidirectional wheel on the connecting plate and/or the omnidirectional wheel on the chassis are driven by a motor.

Preferably, the chassis is provided with a vertically movable electric push rod, the top of the electric push rod is connected to a tray.

Preferably, the chassis and/or the connecting plate is/are provided with an obstacle avoidance module around there.

Preferably, the bottom of the chassis is provided with an automatic charging module.

Preferably, the bottom is provided with a downwardly mounted camera for identifying a warehouse positioning two-dimensional code.

Preferably, the bottom is provided with an upwardly mounted camera for identifying a rack positioning two-dimensional code.

The present invention changes the connection manner between the wheel and the chassis, by means that the two wheels and the connecting member form a wheelset and are pivotally connected to the chassis, when the vehicle is travelling on the uneven ground, by the gravity being newly distributed, the height of the two wheels from the ground are automatically adjusted due to the gravity pressing down, so as to facilitate the wheels contacting the ground. In this way, the spring is eliminated and the vehicle is more stable.

The present invention has the following advantages:
1. Avoiding all the disadvantages that result from the solution of using the spring to contact the ground.
2. No adjustment procedure, easy to produce and assemble.
3. Less parts, easy to install and reduce costs.

It should be understood that the above-described technical features of the present invention and the technical features specifically described hereinafter (as in the embodiments) may be combined with each other to constitute a new or preferred technical solution within the scope of the present invention. For sake of brief, they will not be repeated hereinafter.

### BRIEF DESCRIPTION OF THE DRAWINGS

Figure 1 is a bottom view of a transportation vehicle of the present invention;
Figure 2 is a schematic view of a first embodiment of a transportation vehicle of the present invention;
Figure 3 is a perspective view showing the ground contacting effect of the first embodiment of the transportation vehicle of the present invention;
Figure 4 is a schematic view of a second embodiment of a transportation vehicle of the present invention;
Figure 5 is a schematic view of a third embodiment of a transportation vehicle of the present invention;
Figure 6 is a schematic view of a fourth embodiment of a transportation vehicle of the present invention;
Figure 7 is a schematic view of a fifth embodiment of a transportation vehicle of the present invention;
Figures 8 and 9 are schematic views of a sixth embodiment of a transportation vehicle of the present invention.

### DETAILED DESCRIPTION OF PREFERRED EMBODIMENTS

In the following description of the specific embodiments, in order to clearly illustrate the structure and the operation mode of the present invention, it will be described by means of a plurality of directional words, such as "front", "back", "left", "right", "outside" , "inner", "outward", "inward", "axial", "radial" and the like, which should be understood to be convenience words and should not be construed as limiting words.

### Embodiment 1

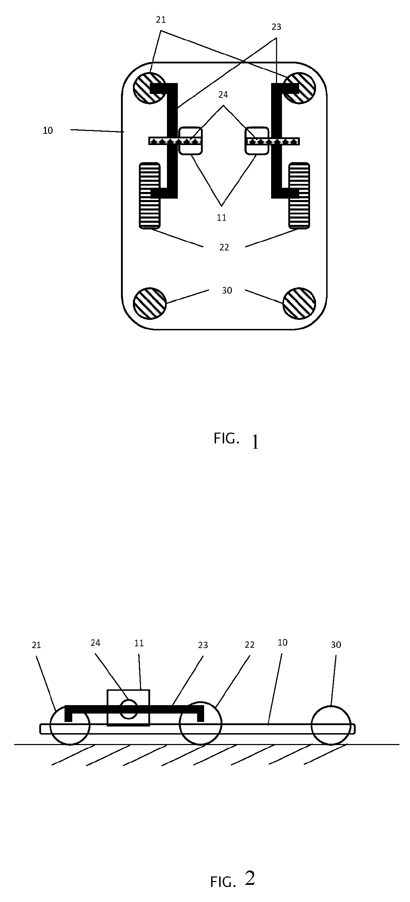

A transportation vehicle shown in FIG. 1 comprises a chassis 10, two wheelsets 20 and two wheels 30, and two bases 11 are fixedly mounted on the chassis 10. The wheelset 20 includes a wheel 21, a wheel 22 and a connecting rod 23 for connecting the wheel 21 and the wheel 22. The intermediate portion of the connecting rod 23 is provided with an intermediate shaft 24, and the intermediate shaft 24 is connected to a side of the base 11. In FIG. 1, the chassis 10 has three wheels on each side, wherein the wheel 21 and the wheel 30 are driven wheels, the wheel 22 is an driving wheel, the wheel 21 and the wheel 22 are firstly fixed on the connecting rod 23, which in turn is connected to the base 11 by the intermediate shaft 24. The base 11 is fixed to the chassis 10.

For the vehicle with this landing solution, gravity is firstly distributed to the driven wheel 22 and the base 11. The gravity subjected by the base 11 is then transmitted to the connecting rod 23 through the intermediate shaft 24 and finally distributed to the driven wheel 21 and the driving wheel 22.

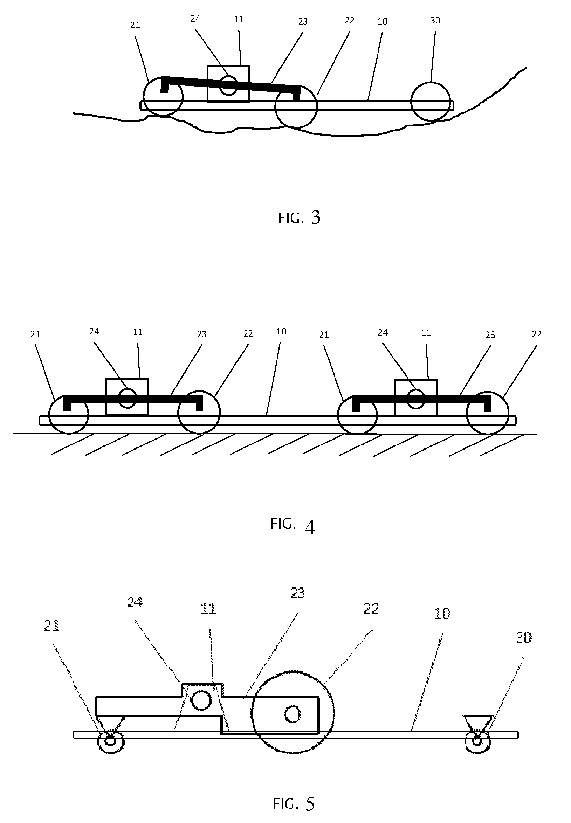

The in-use state view and effect view of the transportation vehicle travelling on the uneven ground are shown in Figure 2 and Figure 3, respectively. As shown, when the wheelset 20 passes through the uneven ground, the heights of the wheel 21 and the wheel 22 from the ground can be automatically adjusted due to gravity pressing down, thereby achieving the purpose of all the wheels contacting the ground.

The subjected gravity proportion of each wheel can be automatically adjusted by the mounting position of the base 11 on the chassis 10 and the perforated position of the intermediate shaft 24 in the connecting rod 23.

### Embodiment 2

In another embodiment of the transportation vehicle shown in FIG. 4, the chassis 10 is provided with two bases 11, the vehicle has a total of eight wheels, each side has two wheelsets 20, and the wheelsets 20 on the left and right sides are connected to the bases 11 by the intermediate shafts 24 respectively.

### Embodiment 3

In another embodiment of the transportation vehicle shown in FIG. 5, the chassis 10 is provided with bases 11, the vehicle has a total of six wheels, each side has one wheelset 20 and one wheel 30 that is connected to the chassis individually. The wheel 30 connected to the chassis individually is a universal wheel, and one of the wheels in the wheelset 20 is a universal wheel connected to the bottom of the connecting rod 23, the other is a wheel pivotally connected to the connecting rod 23.

### Embodiment 4

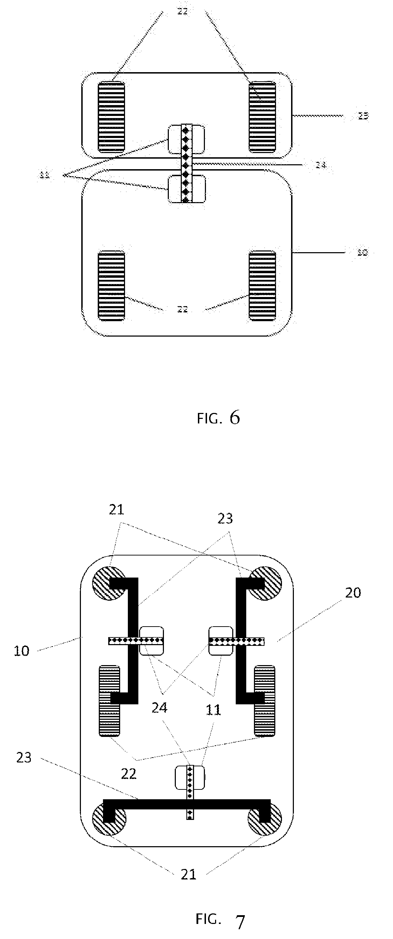

In another embodiment of the transportation vehicle shown in FIG. 6, the connecting member is a connecting plate structure, both sides of each connecting plate are pivotally connected to an omnidirectional wheel, and each of the two connecting plates is provided with a base 11, the bases 11 are connected with each other by an intermediate shaft.

### Embodiment 5

Another embodiment of the transportation vehicle shown in Fig. 7 comprises a chassis 10, three wheelsets 20, and three bases 11 are fixed to the chassis 10. The wheelset 20 includes a wheel 21, a wheel 22 and a connecting rod 23 for connecting the wheel 21 and the wheel 22. The intermediate portion of the connecting rod 23 is provided with an intermediate shaft 24 which is connected to one side of the base 11. The three wheelsets 20 are disposed on both sides and the front side of the chassis 10 respectively, and an axial direction of the intermediate shaft 24 of the wheelsets 20 on both sides is perpendicular to an axial direction of the intermediate shaft 24 of the wheelset 20 disposed on the front side. The wheel 21 and the wheel 22 are firstly fixed to the connecting rod 23, then the connecting rod 23 is connected to the base 11 by the intermediate shaft 24. The base 11 is fixed to the chassis 10.

### Embodiment 6

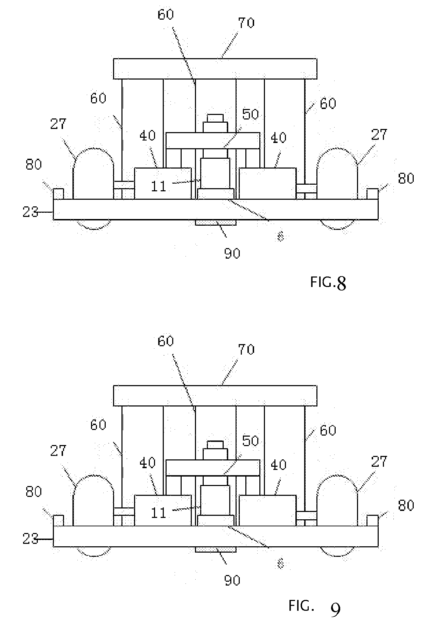

In another embodiment of a transportation vehicle shown in Figures 8 and 9, bases 11 are fixed on both sides of an intermediate shaft 24, one of the two bases 11 is fixed to the chassis 10, and the other is fixed to the connecting plate 23. The intermediate shaft 24 can only rotate about its axis, the chassis 10 is provided with two omnidirectional wheels 27, and the connecting plate 23 is also provided with an omnidirectional wheel 27. The omnidirectional wheel 27 functions as a driving wheel, and the movement of each wheel is controlled by a motor 40 to realize the omnidirectional movement function of the machine. A two-dimensional code is placed on the bottom of the rack. In order to position the transportation vehicle with the two-dimensional code, its chassis 10 is provided with two cameras 50 for identifying the two-dimensional code, and the robot uses the downwardly mounted camera to identify a ground two-dimensional code so that self-positioning is realized and the robot can move freely in the warehouse, and uses the upwardly mounted camera to identify the two-dimensional code on the bottom of the rack so that the rack positioning is realized and the robot can adjust its position to accurately lift the rack; the chassis 10 is provided with a vertical movable electric push rod 60, which is connected to a tray 70, to realize the action of lifting and lowering the rack; the both sides and the front side of the chassis 10 and the both sides and the rear side of the connecting plate 23 are provided with an obstacle avoidance module 80, the obstacle avoidance modules 80 around the transportation vehicle are used to realize the functions of an emergent stop when encountering obstacle, and ensure the safety of the operation; the bottom of the chassis 10 is provided with an automatic charging module 90, so that the robot can automatically charge and realize full automation.

By using two independent bottom plates connected by the shaft, the wheels can be kept contacting the ground even on the uneven ground. The structure utilizes omnidirectional movement function, so that there is no need for steering, and it has high speed, high efficiency and high flexibility; it has less structural components for contacting the ground (damping), no requirement for springs, easy installation and maintenance, and effectively overcomes many issues in other omnidirectional wheel designs, such as high requirement of ground leveling, easy to slip, nod during acceleration and deceleration etc.

In the present invention, the driven wheel and the driving wheel are not described for limitation, and any one of the wheels can be a driven wheel or a driving wheel.

## Claims

1. A transportation vehicle, wherein the transportation vehicle comprises a chassis and a wheelset structure, each side of the chassis being provided with at least one wheelset structure, the wheelset structure comprising a connecting member and two wheels, the connecting member being pivotally connected to the chassis, the two wheels being connected to both ends of the connecting member respectively, and the two wheels being rotatable relative to a pivot point of the connecting member and the chassis to contact the ground.

2. A transportation vehicle according to claim 1, wherein the chassis includes a base fixed to the chassis, the wheelset structure being pivotally connected to the base.

3. A transportation vehicle according to claim 2, wherein the connecting member is a connecting rod structure, both ends thereof are pivotally connected to the two wheels respectively, and a side of the connecting rod structure is provided with an intermediate shaft, the intermediate shaft is cooperatively connected with a shaft hole on a side of the base.

4. A transportation vehicle according to claim 3, wherein both sides of the chassis are each provided with at least two wheelset structures.

5. A transportation vehicle according to claim 3, wherein both sides of the chassis are each provided with a wheel directly pivotally connected to the side of the chassis.

6. A transportation vehicle according to claim 3, wherein a front side of the chassis is also provided with one wheelset structure, an axial direction of the intermediate shaft in the wheelset structure on the front side being perpendicular to an axial direction of the intermediate shaft in the wheelset structure on each side of the chassis.

7. A transportation vehicle according to claim 2, wherein in the wheelset structure, one of the wheels is a universal wheel, the connecting member is a connecting rod structure, and the bottom of one end of the connecting rod structure is connected to the universal wheel, the outside of the other end is pivotally connected to the other wheel.

8. A transportation vehicle according to claim 7, wherein each side of the chassis is provided with at least one wheelset and at least one universal wheel directly connected to the bottom surface of the chassis.

9. A transportation vehicle according to claim 8, wherein the wheel in the wheelset structure is located between the universal wheel in the wheelset structure and the universal wheel connected to the bottom surface of the chassis.

10. A transportation vehicle according to claim 2, wherein the connecting member is a connecting plate structure, both ends thereof are connected with an omnidirectional wheel, and the connecting plate is pivotally connected to the base by an intermediate shaft.

11. A transportation vehicle according to claim 10, wherein the bottom plate is connected with an omnidirectional wheel.

12. A transportation vehicle, wherein the transportation vehicle comprises a chassis and a wheelset structure, the wheelset structure comprising a connecting member and two wheels, the connecting member being pivotally connected to the chassis, the two wheels being connected to both ends of the connecting member respectively, the two wheels being rotatable relative to a pivot point of the connecting member and the chassis to contact the ground.

13. A transportation vehicle according to claim 12, wherein the wheelset structure is mounted on one side of the chassis, the chassis comprises a base fixed to the chassis, the connecting member is a connecting plate structure, both ends of the connecting plate are connected with omnidirectional wheels respectively, and the connecting plate is pivotally connected to the base by an intermediate shaft, and the chassis is provided with two omnidirectional wheels directly connected to the chassis.

14. A transportation vehicle according to claim 13, wherein the omnidirectional wheel on the connecting plate and/or the omnidirectional wheel on the chassis are driven by a motor.

15. A transportation vehicle according to claim 13, wherein the chassis is provided with a vertically movable electric push rod, the top of the electric push rod is connected to a tray.

16. A transportation vehicle according to claim 13, wherein the chassis and/or the connecting plate is/are provided with an obstacle avoidance module around there.

17. A transportation vehicle according to claim 13, wherein the bottom of the chassis is provided with an automatic charging module.

18. A transportation vehicle according to claim 13, wherein the bottom is provided with a downwardly mounted camera for identifying a warehouse positioning two-dimensional code.

19. A transportation vehicle according to claim 13, wherein the bottom is provided with an upwardly mounted camera for identifying a rack positioning two-dimensional code.
